# EUROPÄISCHE PATENTSCHRIFT

(11) **EP 1 805 069 B1**
(45) Veröffentlichungstag und Bekanntmachung des Hinweises auf die Patenterteilung: **23.01.2008**
(21) Anmeldenummer: 05810090.0
(22) Anmeldetag: 26.10.2005
(51) Int. Cl.: B60S 1/52

(54) **SPRITZDÜSEN-EINRICHTUNG EINER SCHEIBENWASCHANLAGE, FÜR INSBESONDERE EINE WINDSCHUTZSCHEIBE, EINES FAHRZEUGES**
SPRAY NOZZLE DEVICE OF A WINDOW WASHING INSTALLATION, ESPECIALLY FOR A WINDSCREEN, PERTAINING TO A VEHICLE
DISPOSITIF GICLEUR D'UN SYSTEME LAVE-GLACE, NOTAMMENT POUR UN PARE-BRISE, D'UN VEHICULE

(30) Priorität: 30.10.2004 DE 102004052709
(43) Veröffentlichungstag der Anmeldung: 11.07.2007
(73) Patentinhaber: A. RAYMOND ET CIE, 38000 Grenoble (FR); REHAU AG + Co, 95111 Rehau (DE)
(72) Erfinder: BEYER, Matthias, 71034 Böblingen (DE); LE MERCIER, Arnaud, Bloom Field Hills , MI, 48301 (US); RATHEY, Markus, 79145 Bad Bellingen (DE); UTZ, Daniel, 79415 Bad Bellingen (DE); ZIELKE, Peter, 08626 Adorf/V. (DE)
(74) Vertreter: Patentanwalts-Partnerschaft Rotermund + Pfusch + Bernhard
(86) Internationale Anmeldenummer: PCT/DE2005/001911
(87) Internationale Veröffentlichungsnummer: WO 2006/047989

(56) Entgegenhaltungen:
- EP-A- 1 566 220
- GB-A- 865 845
- GB-A- 2 062 452
- US-A- 3 979 068
- US-A- 6 062 491
- US-A1- 2002 060 254
- US-A1- 2003 234 303
- PATENT ABSTRACTS OF JAPAN Bd. 012, Nr. 297 (C-519), 12. August 1988 (1988-08-12) -& JP 63 065966 A (KOITO MFG CO LTD), 24. März 1988 (1988-03-24)

## Beschreibung

Die Erfindung betrifft eine Spritzdüsen-Einrichtung einer Scheibenwaschanlage, für eine Windschutzscheibe, eines Fahrzeuges, nach dem Oberbegriff des Patentanspruchs 1.

Eine solche Spritzdüsen-Einrichtung ist aus EP 0 830 996 B1 bekannt. Die zwei dort innerhalb eines gemeinsamen Moduls liegenden Spritzdüsen werden von einer gemeinsamen Waschflüssigkeitsversorgungskammer aus wechselweise mit Waschflüssigkeit versorgt. In der gemeinsamen Flüssigkeitsversorgungskammer schwingt ein Pendelkörper, der die auszuspritzende Flüssigkeit einerseits in Schwingungen versetzt und andererseits für die wechselweise Beaufschlagung der in dem Modul benachbart liegenden Spritzdüsen sorgt. Die Spritzdüsenköpfe, in denen die Austrittsöffnungen liegen, sind zur Erzielung unterschiedlicher Spritzrichtungen einstellbar. Mit einer solchen Spritzdüseneinrichtung wird ein insgesamt zu benetzendes Scheiben-Waschfeld periodisch abwechselnd in Teilbereichen benetzt, das heißt eine gemeinsame, gleichzeitige Benetzung des gesamten Waschfeldes ist weder vorgesehen noch möglich.

Scheibenwaschanlagen mit Sprühnebeldüsen, aus denen das Waschmedium nebelförmig, das heißt in Form kleinster Tröpfchen fächerförmig austritt, sind aus US 5,860,603 und US 4,463,904 bekannt. In diesen Dokumenten ist insbesondere der Aufbau und die Funktionsweise von Sprühnebel erzeugenden Spritzdüsen ausführlich erläutert. Bei Waschanlagen mit solchen Spritzdüsen sind zur Reinigung beispielsweise einer Windschutzscheibe eines Fahrzeuges über die Breite der Windschutzscheibe jeweils mehrere Spritzdüsen zueinander beabstandet verteilt. Dabei ist auf jeder Hälfte der Windschutzscheibe jeweils mindestens eine Spritzdüse vorgesehen. Bei einer aus der Praxis bekannten Anwendung befinden sich auf der Fahrerseite der Windschutzscheibe zwei voneinander beabstandete Spritzdüsen. Aus diesen bekannten Spritzdüsen tritt jeweils ein Sprühnebel in der Form eines Fächers aus, dessen jeweiliger Scheitelpunkt in der Öffnung einer zugehörigen Spritzdüse liegt. Die Sprühnebelfächer sollen sich in einem möglichst geringen Bereich gegenseitig überdecken, da in einem Überlagerungsbereich die Gefahr eines zu großen Flüssigkeitsanfalls besteht. Solche Bereiche zu großen Flüssigkeitsanfalls besitzen den Nachteil, dass in diesen Bereichen die Sicht durch die Windschutzscheibe übermäßig stark behindert wird. Deshalb wird bei der Positionierung und Sprührichtungseinstellung der bekannten Spritzdüsen darauf geachtet, dass derartige, sich negativ auf die Durchsichtigkeit der Windschutzscheibe auswirkenden Überlagerungsbereiche möglichst nicht oder zumindest nur in geringem Umfang anfallen. Daher werden Sprühnebel-Fächerformen ausgewählt, bei denen die Fächer einen möglichst geringen Fächerwinkel bezogen auf ihren Scheitelpunkt besitzen. Dies führt wiederum dazu, entweder über die Breite der Windschutzscheibe eine Vielzahl einzeln voneinander benachbarter Spritzdüsen einzusetzen oder es gelingt insbesondere nicht, die Windschutzscheibe, insbesondere in den unteren Seitenbereichen ausreichend zu besprühen.

Es ist in der Praxis bereits versucht worden, sogenannte Doppelspritzdüsen einzusetzen, aus denen Sprühnebelfächer übereinander liegend ausgespritzt werden. Die Ausbildung der Fächer ist dabei derart, dass ein unterer Fächer mit einem relativ großen Fächerwinkel erzeugt wird, der in Hochrichtung der Windschutzscheibe relativ kurz ist. Der zweite Sprühnebelfächer wird über dem ersten, unteren Sprühnebelfächer positioniert. Dieser zweite Fächer besitzt einen gegenüber dem ersten Fächer geringeren Fächerwinkel und in Hochrichtung der Windschutzscheibe eine größere Erstreckung als der untere Sprühwinkel. Ein Nachteil dieser Sprühnebel-Fächerzuordnung besteht darin, dass im unteren Windschutzscheibenbereich der zweite Sprühnebelfächer sich oberhalb des ersten, unteren Sprühnebelfächers erstreckt. Dies hat zur Folge, dass zumindest bei fahrendem Fahrzeug eine Vermischung der Sprühnebelflüssigkeit beider Sprühnebelfächer in dem Überdeckungsbereich auftritt und zu einer Sichtbehinderung führt. Dabei liegt die Sichtbehinderung gerade auf der Fahrerseite in dem Hauptsichtbereich des Fahrers.
US-A-2002/0060254 zeigt den Oberbegriff des Anspruche 1. Die Erfindung beschäftigt sich mit dem Problem, eine gattungsgemäße Spritzdüseneinrichtung zu schaffen, mit der Scheibenwaschanlagen bei einem Einsatz von möglichst wenigen Spritzdüseneinrichtungen eine möglichst vollständige Benetzung einer Windschutzscheibe bis in ihre äußersten Seitenbereiche ermöglichen. Dabei soll insbesondere eine Überdeckung von Sprühnebelfächern vermieden werden, die von einzelnen Spritzdüsen erzeugt werden, um dadurch Sichtbehinderungen während eines Betriebes der Scheibenwaschanlage zu vermeiden.

Gelöst wird dieses Problem durch die Ausbildung einer ga.t-tungsgemäßen Spritzdüsen-Einrichtung nach den kennzeichnenden Merkmalen des Patentanspruchs 1.

Vorteilhafte und zweckmäßige Ausgestaltungen sind Gegenstand der Unteransprüche.

Die Erfindung beruht auf dem allgemeinen Gedanken, horizontal benachbarte Sprühnebelfächer mit Scheitelpunkten zu erzeugen, die möglichst eng aneinander liegen, das heißt aus Spritzdüsen erzeugt werden, die praktisch direkt nebeneinander liegen. Bei derartig direkt nebeneinander liegenden Spritzdüsen können in der Scheibenebene Sprühfächer erzeugt werden, die sehr stark in dieser Ebene gegeneinander geneigt sind. Durch eine derartige, starke Neigung gegeneinander kann ein mittlerer Überdeckungsbereich derart nebeneinander liegender Sprühfächer äußerst gering gehalten und im Extremfall sogar praktisch vermieden werden. Vermieden werden kann ein Überdecken praktisch dann, wenn die Grenzlinien der Sprühflächen benachbarter Sprühfächer nahezu parallel zueinander verlaufen. Liegen die Spritzdüsen direkt benachbart nebeneinander, entsteht bei einem solchen parallelen Verlauf der Grenzlinien praktisch weder ein Überdeckungsbereich noch ein unbesprühter Scheibenbereich. Dies wäre bei den im Stand der Technik bekannten, voneinander beabstandet angeordneten Sprühnebeldüsen nicht möglich. Ein unbesprühter Scheibenfeldbereich würde dort bei parallelem Verlauf der sich gegenüberliegenden Grenzlinien benachbarter Sprühfächer den Abstandsbereich zwischen den beiden benachbarten Spritzdüsen belegen. Mit einer erfindungsgemäßen Spritzdüsen-Einrichtung, bei der die Spritzdüsen direkt benachbart nebeneinander liegen, können insbesondere die unteren, seitlichen Randbereiche einer Windschutzscheibe sehr gut benetzt werden.

Ein Ausführungsbeispiel einer Scheibenwaschanlage mit erfindungsgemäß ausgebildeten und angeordneten SpritzdüsenEinrichtungen ist in der Zeichnung dargestellt.

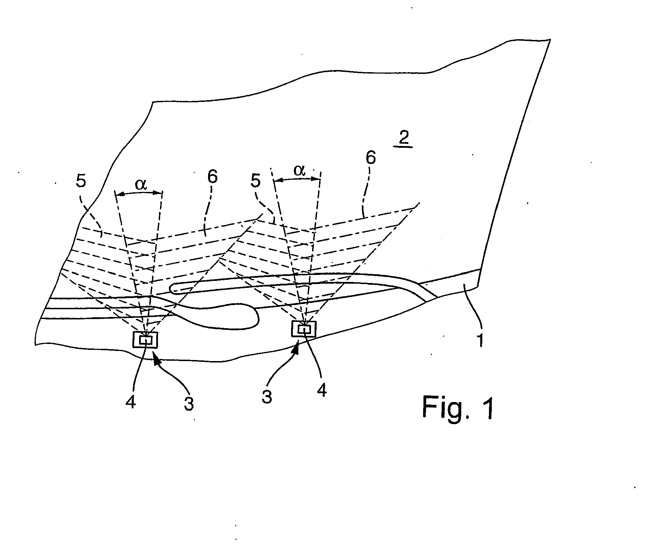

In dieser zeigt in schematischer Form die einzige
- Fig. 1: eine Ansicht auf eine Windschutzscheibe mit Waschspritzdüsen von vorne.

In einem Bereich 1 unterhalb einer Windschutzscheibe 2 ist im Bereich einer jeden Seitenhälfte der Windschutzscheibe 2 eine Spritzdüsen-Einrichtung in der Form eines Spritzdüsenmoduls 3 mit jeweils zwei einzeln verstellbaren Spritzdüsen 4 vorgesehen. Die Spritzdüsen 4 sind Bestandteil eines Spritzmechanismus, durch den aus den Spritzdüsen 4 jeweils fächerartig Sprühnebel austreten. Diese Sprühnebelfächer sind in der Zeichnung jeweils mit den Bezugszahlen 5 und 6 belegt. Jeder dieser Sprühnebelfächer 5, 6 entstammt einer zugeordneten Spritzdüse 4. Dabei sind jeweils zwei Spritzdüsen 4 direkt, das heißt engstmöglich zueinander, benachbart in einem Spritzdüsenmodul 3 angeordnet.

Die Sprühnebelfächer 5 und 6, die jeweils in einem Spritzdüsenmodul 3 benachbart angeordneten Spritzdüsen 4 erzeugt werden, überdecken sich bei dem gezeichneten Ausführungsbeispiel um weniger als etwa α = 15 Winkelgrad. Bei einer optimierten Auslegung lässt sich dieser Überdeckungsbereich im Idealfall auf nahezu 0 verringern. Dies ist der wesentliche Vorteil, der sich mit einer erfindungsgemäßen Einrichtung erzielen lässt. Dieser Vorteil ist deshalb so wichtig, weil Überdeckungsfelder der Sprühnebelfächer 5, 6 zu Sichtbehinderungen für den Fahrer beim Betrieb der Scheibenwaschanlage führen, die insbesondere aus Fahrsicherheitsaspekten unbedingt vermieden werden müssen.

Ein weiterer, wesentlicher Vorteil wird durch die Erfindung dadurch erzielt, dass mit möglichst wenigen, einzubauenden Spritzdüsenmodulen 3 gearbeitet werden kann. Hierdurch lassen sich Herstellungskosten senken. Mit beispielsweise je einem erfindungsgemäßen Spritzdüsenmodul 3 in jedem Seitenhälftenbereich einer Windschutzscheibe 2 lässt sich ein Wischergebnis erzielen, das bisher allenfalls mit über die Windschutzscheibe 3 verteilt angeordneten Sprühnebel-Spritzdüsen erzielbar war.

Durch eine Einstellbarkeit der Spritzrichtung der Spritzdüsen 4 innerhalb der Spritzdüsenmodule 3 lassen sich die Sprühnebelfächer 5, 6 richtungsmäßig auf individuelle Scheibengeometrien und dabei insbesondere Scheibenwölbungen unterschiedlichster Art hervorragend optimal ausrichten.

Da es sich bei den erfindungsgemäßen Sprühnebel-Spritzdüsen 4 um solche handelt, die in dem Stand der Technik allgemein bekannt sind, und zwar insbesondere aus den eingangs zitierten Dokumenten, bedarf es bezüglich deren Ausbildung hier keiner weiteren Erläuterung. Soweit bei den erfindungsgemäßen Spritzdüsenmodulen 3 jeweils ein Paar Einzel-Spritzdüsen zusammengefasst ist, handelt es sich ebenfalls um eine Maßnahme, die von einem Fachmann aufgrund des vorbekannten Standes der Technik ohne weiteres realisierbar ist.

## Patentansprüche

1. Spritzdüsen-Einrichtung einer Scheibenwaschanlage, für eine Windschutzscheibe (2), eines Fahrzeuges, mit zwei, eng benachbart, in einem gemeinsamen Spritzdüsenmodul, vorgesehenen Spritzdüsen (4), mit den Merkmalen,
- die beiden Spritzdüsen (4) sind als Sprühnebel-Spritzdüsen ausgebildet, in denen die auszuspritzende Flüssigkeit zur Erzeugung von Sprühnebelfächern (5, 6) in Schwingungen versetzt wird, wobei jeder Sprühnebelfächer (5, 6) in der jeweils zugeordneten Spritzdüsenöffnung einen Sprühnebelfächer (5, 6) - Scheitelpunkt besitzt,
- beide Spritzdüsen (4) sind für ein gleichzeitiges Spritzen mit Waschflüssigkeit beaufschlagbar,
- die von den Spritzdüsen (4) erzeugbaren Sprühnebelfächer (5, 6) liegen bei einer senkrechten Projektion auf die zu reinigende Scheibe (2) zumindest zum überwiegenden Teil horizontal nebeneinander, **dadurch gekennzeichnet, daß** die beiden Spritzdüsenöffnungen eines jeweiligen Spritzdüsenmoduls (3) direkt, d.h. engstmöglich zueinander, benachbart angeordnet sind und wobei ferner an jeder Seite (11) der Windschutzscheibe (2) ein Sprühnebelmodul (3) vorgesehen ist, und, daß die Spritzdüsen (4) bezüglich ihrer Spritzrichtung einzeln verstellbar sind.

2. Spritzdüsen-Einrichtung nach Anspruch 1,
**dadurch gekennzeichnet,**
**dass** sich die Sprühnebelfächer (5, 6) um weniger als maximal α = 25 bis 30 Winkelgrad überdecken.

3. Spritzdüsen-Einrichtung nach Anspruch 2,
**dadurch gekennzeichnet,**
**dass** der Überdeckungswinkel α weniger als 25 Winkelgrad beträgt.

4. Spritzdüsen-Einrichtung nach Anspruch 3,
**dadurch gekennzeichnet,**
**dass** der Überdeckungswinkel α weniger als 20 Winkelgrad misst.

5. Spritzdüsen-Einrichtung nach Anspruch 4,
**dadurch gekennzeichnet,**
**dass** der Überdeckungswinkel α maximal bei 15 Winkelgrad liegt.

## Claims

1. A spray nozzle assembly of a window washing system for a windshield (2) of a motor vehicle, comprising two closely adjacent spray nozzles (4) that are provided in a joint spray nozzle module, having features wherein
- said two spray nozzles (4) are designed as spray-mist nozzles, in which the fluid to be sprayed is set in oscillation to produce spray-mist fans (5, 6), each spray-mist fan (5, 6) having a spray-mist fan (5, 6) apex in the respective spray nozzle opening,
- both spray nozzles (4) can be supplied with washing fluid for simultaneous spraying,
- said spray-mist fans (5, 6) producible by said spray nozzles (4) are situated horizontally adjacently, at least for the most part, based on a vertical projection of the window (2) to be cleaned,
**characterized in that** the two spray nozzle openings of a respective spray nozzle module (3) are arranged directly side-by-side, i.e., as close together as possible, and furthermore, wherein a spray-mist module (3) is also provided on each side (11) of the windshield (2), and the spray nozzles (4) are adjustable individually with regard to the direction of spraying.

2. The spray nozzle assembly according to claim 1,
**characterized in that**
said spray-mist fans (5, 6) overlap by less than a maximum of α = 25 to 30 degrees of angle.

3. The spray nozzle assembly according to claim 2,
**characterized in that**
the overlap angle α is less than 25 degrees of angle.

4. The spray nozzle assembly according to claim 3,
**characterized in that**
the overlap angle α measures less than 20 degrees of angle.

5. The spray nozzle assembly according to claim 4,
**characterized in that**
the overlap angle α is no more than 15 degrees of angle.

## Revendications

1. Système de gicleurs d'un lave-glace pour un pare-brise (2) d'un véhicule, comprenant deux gicleurs (4) étroitement voisins, prévus dans un module de gicleurs commun, avec les caractéristiques,
- les deux gicleurs (4) sont réalisés sous forme de gicleurs à brouillard de pulvérisation, dans lesquels le liquide à pulvériser est animé d'oscillations pour produire des éventails de brouillards de fines gouttelettes (5, 6), chaque éventail de brouillard de fines gouttelettes (5, 6) présentant un sommet dans l'orifice de gicleur respectivement associé,
- les deux gicleurs (4) peuvent être alimentés en liquide de lavage pour une pulvérisation simultanée,
- les éventails de brouillards de fines gouttelettes (5, 6), pouvant être produits par les gicleurs (4), se situent horizontalement l'un à côté de l'autre, au moins en majeure partie, dans une projection perpendiculaire sur la glace (2) à laver,
**caractérisé en ce que** les deux orifices de gicleurs d'un module de gicleurs (3) respectif sont disposés directement au voisinage l'un de l'autre, c'est-à-dire le plus étroitement possible l'un par rapport à l'autre, un module de gicleurs (3) étant par ailleurs prévu sur chaque côté (11) du pare-brise (2), et **en ce que** les gicleurs (4) sont réglables individuellement quant à leur direction de pulvérisation.

2. Système de gicleurs suivant la revendication 1, **caractérisé en ce que** les éventails de brouillards de fines gouttelettes (5, 6) se recouvrent de moins d'un angle maximal α = 25 à 30°.

3. Système de gicleurs suivant la revendication 2, **caractérisé en ce que** l'angle de recouvrement α est de moins de 25°.

4. Système de gicleurs suivant la revendication 3, **caractérisé en ce que** l'angle de recouvrement α est de moins de 20°.

5. Système de gicleurs suivant la revendication 4, **caractérisé en ce que** l'angle de recouvrement est au maximum de l'ordre de 15°.
